# EUROPEAN PATENT APPLICATION

(11) **EP 4 197 895 A1**
(43) Date of publication of application: **21.06.2023**
(21) Application number: 21889233.9
(22) Date of filing: 04.11.2021
(51) Int. Cl.: B63B 25/08, B63B 25/16, F17C 13/10

(54) **FLOATING STRUCTURE**

(30) Priority: 09.11.2020 JP 2020186523
(71) Applicant: Mitsubishi Shipbuilding Co., Ltd., Yokohama-shi Kanagawa 220-8401 (JP)
(72) Inventor: ABE Kazuya, Yokohama-shi, Kanagawa 220-8401 (JP); MORIMOTO Shinsuke, Yokohama-shi, Kanagawa 220-8401 (JP)
(74) Representative: Studio Torta S.p.A.
(86) International application number: PCT/JP2021/040592
(87) International publication number: WO 2022/097681

(57) **Abstract**

This floating structure comprises: a floating body; a tank disposed on the floating body and capable of storing liquefied carbon dioxide; a communication pipe connected to the tank and communicating with the outside of the tank; a safety valve which is provided in the communication pipe, has a valve body capable of opening and closing a flow path in the communication pipe, and, when the pressure inside the tank reaches a predetermined safety valve operating pressure, opens the valve body to communicate the inside of the tank with the outside of the tank; and an on/off valve which is provided in the communication pipe, is disposed between the safety valve and the tank, and is capable of closing the flow path portion in the communication pipe.

## Description

### Technical Field

The present disclosure relates to a floating structure.

Priority is claimed on Japanese Patent Application No. 2020-186523, filed November 9, 2020, the content of which is incorporated herein by reference.

### Background Art

A ship or the like provided with a tank for storing a liquefied gas (liquefied natural gas (LNG)) is provided with a safety valve for releasing the pressure inside the tank to the outside of the tank when the pressure inside the tank exceeds the design pressure. For example, PTL 1 discloses a configuration in which a safety valve is provided in an atmosphere discharge pipe in a ship.

### Citation List

### Patent Literature

[PTL 1] Japanese Unexamined Utility Model Registration Application Publication No. 61-186700

### Summary of Invention

### Technical Problem

However, when the liquefied carbon dioxide is accommodated in the tank, the liquefied carbon dioxide may solidify to form dry ice when the safety valve is operated for the following reasons. That is, the pressure of the liquefied carbon dioxide accommodated in the tank corresponds to the tank operating pressure. On the other hand, when the safety valve is opened and the inside of the tank is opened to the atmosphere, the pressure on the discharge side of the safety valve naturally becomes atmospheric pressure.

In the case of liquefied carbon dioxide, the pressure at the triple point where the gas phase, the liquid phase, and the solid phase coexist (triple point pressure) is higher than the triple point pressure of LNG or LPG, and the difference from the tank operating pressure during operation is small. As a result, when the safety valve is opened to the atmosphere on the discharge side, the pressure of the liquefied carbon dioxide becomes equal to or lower than the triple point pressure, and flash evaporation of the liquefied carbon dioxide may occur. Then, due to the latent heat of evaporation of the flash evaporation of the liquefied carbon dioxide, a decrease in temperature of the liquefied carbon dioxide remaining without evaporation occurs, and the liquefied carbon dioxide may solidify around the safety valve to form dry ice. When dry ice is formed in the safety valve, the operation of the valve body of the safety valve is obstructed, and even when the pressure in the tank decreases to be equal to or lower than a predetermined pressure, there is a possibility that the safety valve cannot be closed. Further, when the state where the safety valve cannot be closed continues, the pressure in the tank may further decrease, and there is a possibility that the liquefied carbon dioxide itself in the tank may solidify to form a large amount of dry ice.

The present disclosure has been made to solve the above problems, and an object thereof is to provide a floating structure that can reliably seal the inside of the tank even in a case where the closing operation of the safety valve is obstructed by the dry ice formed when the safety valve is operated.

### Solution to Problem

In order to solve the above problems, the floating structure according to the present disclosure includes a tank, a communication pipe, a safety valve, and an opening-closing valve. The tank is disposed in the floating main structure. The tank is capable of storing liquefied carbon dioxide. The communication pipe is connected to the tank and communicates with an outside of the tank. The safety valve is provided in the communication pipe. The safety valve has a valve body capable of opening and closing a flow channel in the communication pipe. The safety valve allows an inside of the tank and the outside of the tank to communicate with each other by opening the valve body when a pressure inside the tank reaches a predetermined safety valve operating pressure. The opening-closing valve is provided in the communication pipe and is disposed between the safety valve and the tank. The opening-closing valve is capable of blocking a flow channel in the communication pipe.

The floating structure according to the present disclosure includes a tank, a communication pipe, and a safety valve. The tank is disposed in the floating main structure. The tank is capable of storing liquefied carbon dioxide. The communication pipe is connected to the tank and communicates with an outside of the tank. The safety valve is provided in the communication pipe. The safety valve has a valve body capable of opening and closing a flow channel in the communication pipe. The safety valve allows an inside of the tank and the outside of the tank to communicate with each other by opening the valve body when a pressure inside the tank reaches a predetermined safety valve operating pressure. The safety valve includes a discharge pipe. The discharge pipe has a discharge port which is open to an atmosphere and is open downward. The discharge port is open to an atmosphere and is open downward. Advantageous Effects of Invention

According to the floating structure of the present disclosure, even when the closing operation of the safety valve is obstructed by the dry ice formed when the safety valve is operated, the inside of the tank can be reliably sealed.

### Brief Description of Drawings

Fig. 1 is a plan view showing a schematic configuration of a ship as a floating structure according to an embodiment of the present disclosure.
Fig. 2 is a view showing a tank and a safety valve device provided in the ship according to the embodiment of the present disclosure, and is a sectional view taken along line II-II of Fig. 1.
Fig. 3 is a sectional view showing a communication pipe, a safety valve, and an opening-closing valve provided in the ship according to the embodiment of the present disclosure.
Fig. 4 is a sectional view showing a state where the opening-closing valve shown in Fig. 3 is closed.
Fig. 5 is a diagram showing a hardware configuration of a notification unit according to the embodiment of the present disclosure.
Fig. 6 is a functional block diagram of the notification unit according to the embodiment of the present disclosure.
Fig. 7 is a diagram showing an example of timing for outputting a notification to the outside in the notification unit according to the embodiment of the present disclosure. Description of Embodiments

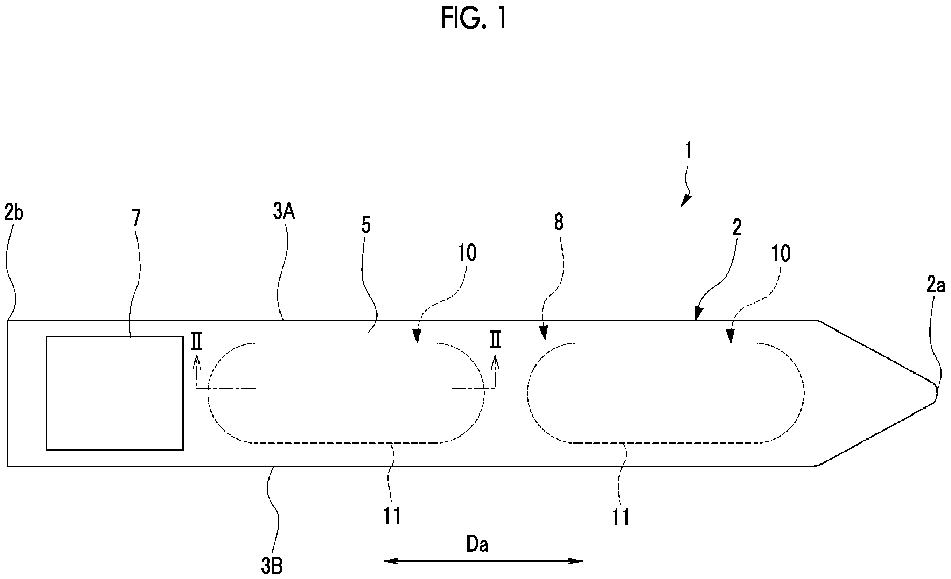

Hereinafter, a floating structure according to an embodiment of the present disclosure will be described with reference to Figs. 1 to 7.

### (Configuration of Ship)

As shown in Fig. 1, in the embodiment of the present disclosure, a ship 1 which is a floating structure carries liquefied carbon dioxide. The ship 1 includes at least a hull 2 as a floating main structure and a tank facility 10.

### (Configuration of Hull)

The hull 2 has a pair of sides 3A and 3B, a bottom (not shown), and an upper deck 5, which form an outer shell thereof. The sides 3A and 3B each have a pair of side shell platings which form the left and right sides. The bottom (not shown) has a bottom shell plating connecting the sides 3A and 3B to each other. Due to the pair of sides 3A and 3B and the bottom (not shown), the outer shell of the hull 2 has a U-shape in a cross section orthogonal to a stem-stern direction Da. The upper deck 5 shown in this embodiment is a continuous deck exposed to the outside. In the hull 2, a superstructure 7 having an accommodation space is formed on the upper deck 5 on a stern 2b side. The position of the superstructure 7 is merely an example, and may be disposed on a stem 2a side of the hull 2, for example.

A cargo tank storage compartment (hold) 8 is formed in the hull 2.

### (Configuration of Tank Facility)

A plurality of tank facilities 10 are disposed in the cargo tank storage compartment 8 along the stem-stern direction Da. In the embodiment of the present disclosure, two tank facilities 10 are disposed at intervals in the stem-stern direction Da.

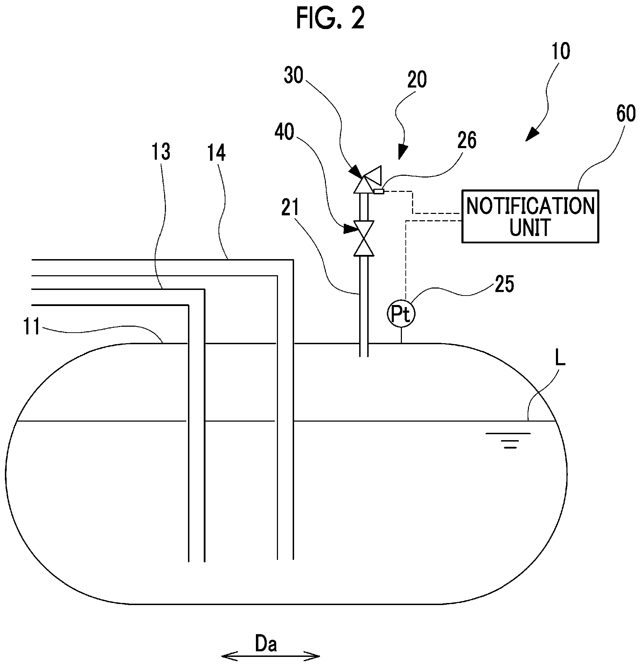

As shown in Fig. 2, a tank facility 10 includes at least a tank 11, a loading pipe 13, an unloading pipe 14, and a safety valve device 20.

In this embodiment, the tank 11 is disposed on the hull 2. The tank 11 has, for example, a cylindrical shape extending in the horizontal direction. In this embodiment, the tank 11 is disposed in the long axis direction along the stem-stern direction Da. The tank 11 accommodates a liquefied carbon dioxide L inside thereof. The tank 11 is not limited to a cylindrical shape, and the tank 11 may have a spherical shape, a square shape, or the like.

The loading pipe 13 loads the liquefied carbon dioxide L supplied from an on-land liquefied carbon dioxide supply facility or the like into the tank 11. The loading pipe 13 penetrates the top of the tank 11 from the outside of the tank 11 and extends to the inside of the tank 11. The tip portion of the loading pipe 13 is open to the inside of the tank 11.

The unloading pipe 14 guides the liquefied carbon dioxide L in the tank 11 to the outside of the ship. The unloading pipe 14 penetrates the top of the tank 11 from the outside of the tank 11 and extends to the inside of the tank 11. A pump (not shown) is provided at the tip portion of the unloading pipe 14. The pump (not shown) sucks the liquefied carbon dioxide L in the tank 11 and delivers the liquefied carbon dioxide L to the unloading pipe 14. The unloading pipe 14 guides the liquefied carbon dioxide L delivered from the pump to the outside of the tank 11 (the outside of the ship).

### (Configuration of Safety Valve Device)

The safety valve device 20 mainly includes a communication pipe 21, a safety valve 30, an opening-closing valve 40, and a notification unit 60.

The communication pipe 21 is connected to the tank 11. The communication pipe 21 communicates between the inside and the outside of the tank 11, for example, at the top of the tank 11. Although a spring-type safety valve will be described as an example of the safety valve 30 in this embodiment, a pilot-type safety valve or the like may be used.

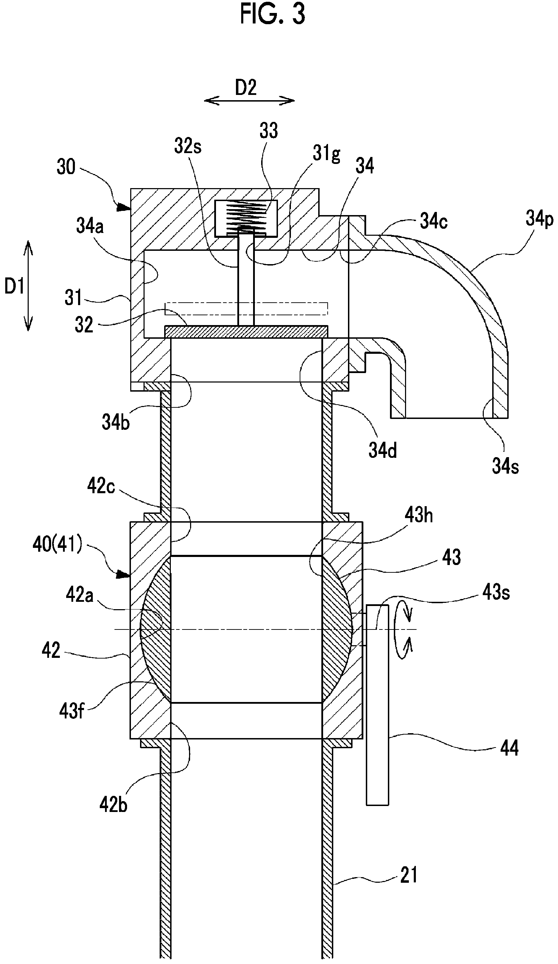

As shown in Fig. 3, the safety valve 30 is provided in the communication pipe 21. The safety valve 30 is disposed at, for example, a tip portion of the communication pipe 21. The safety valve 30 includes a valve box 31, a valve body 32, an energizing member 33, and a discharge pipe 34p.

The valve box 31 includes a flow channel portion 34 continuous with the flow channel in the communication pipe 21 inside thereof. The flow channel portion 34 includes a valve chamber 34a, an inflow nozzle 34b, and a discharge nozzle 34c. The valve chamber 34a accommodates the valve body 32. The inflow nozzle 34b has a tubular shape and extends from the valve chamber 34a in a first direction D1. A communication pipe 21 is connected to the end portion of the inflow nozzle 34b on a side opposite to the valve chamber 34a side. The discharge nozzle 34c has a tubular shape and extends from the valve chamber 34a in a second direction D2 intersecting the first direction D1. The discharge pipe 34p is connected to the tip portion of the discharge nozzle 34c. The discharge pipe 34p has a discharge port 34s that is open downward and is open to the atmosphere. Here, the lower direction, which is the opening direction of the discharge port 34s, means a lower side in the horizontal direction.

The valve body 32 blocks an opening 34d of the inflow nozzle 34b from the valve chamber 34a side. The valve body 32 integrally includes a valve shaft 32s extending in the first direction D1. The valve shaft 32s is movably held in the first direction D1 in a holding hole 31g formed in the valve box 31. As a result, the valve body 32 is movably disposed in the first direction D1 within the valve chamber 34a. The valve body 32 is configured to be capable of reciprocating between a closed state where the opening 34d of the inflow nozzle 34b is blocked from the valve chamber 34a side and an open state where the valve body 32 is separated from the opening 34d side to the valve chamber 34a side (a state indicated by a two-dot chain line in Fig. 3). The pressure of the liquefied carbon dioxide L (the gas phase) in the communication pipe 21 connected to the inflow nozzle 34b acts on the valve body 32 in the closed state.

The energizing member 33 presses the valve body 32 in a direction of pressing the valve body 32 into the opening 34d of the inflow nozzle 34b along the first direction D1. The energizing member 33 is, for example, a coil spring or a diaphragm.

In the safety valve 30, when the pressure in the communication pipe 21 (pressure in the tank 11) connected to the inflow nozzle 34b reaches a preset safety valve operating pressure (upper limit value) P1, the valve body 32 is set to be separated from the opening 34d against the energizing force of the energizing member 33. As a result, the valve body 32 is changed from the closed state to the open state, and the flow channel in the communication pipe 21 is opened to communicate with the atmosphere. Then, the pressure inside the communication pipe 21 (the gas of the liquefied carbon dioxide L) is discharged to the atmosphere from the discharge port 34s through the flow channel portion 34. Furthermore, when the pressure exceeds the operating pressure on the negative pressure side, the atmosphere is sucked into the tank 11.

In the safety valve 30, when the pressure in the tank 11 is reduced by discharging the gas in the tank 11 to the atmosphere and becomes less than a preset safety valve return pressure P2, the valve body 32 is moved to the inflow nozzle 34b side by the energizing force of the energizing member 33. As a result, the valve body 32 returns from the open state to the closed state. The valve body 32 in the closed state blocks the opening 34d, and accordingly, the flow channel in the communication pipe 21 is closed and is cut off from the atmosphere. The safety valve return pressure P2 may be the same value as the safety valve operating pressure P1 or may be lower than the safety valve operating pressure P1.

In the safety valve 30, when the pressure of the liquefied carbon dioxide L rapidly drops in the process of being open to the atmosphere from the communication pipe 21 through the flow channel portion 34 at the discharge port 34s, flash evaporation may occur and the dry ice may form in the flow channel portion 34. When the formed dry ice is sandwiched between the opening 34d of the inflow nozzle 34b and the valve body 32, the valve body 32 may be prevented from shifting from the open state to the closed state. The safety valve device 20 includes the opening-closing valve 40 in preparation for such a case.

The opening-closing valve 40 is provided in the intermediate portion of the communication pipe 21. The opening-closing valve 40 is disposed between the safety valve 30 and the tank 11. The opening-closing valve 40 is configured to be able to block the flow channel in the communication pipe 21. In this embodiment, a manual ball valve 41 is used as the opening-closing valve 40. The ball valve 41 includes a ball valve housing 42, a ball valve body 43, and an operation handle 44.

The ball valve housing 42 has a tubular shape extending along the first direction D1 and is connected to the intermediate portion of the communication pipe 21. A valve accommodation unit 42a, an inflow port 42b, and an outflow port 42c are formed in the ball valve housing 42. The valve accommodation unit 42a accommodates the ball valve body 43. The valve accommodation unit 42a is formed to be curved and recessed radially outward. The inflow port 42b and the outflow port 42c are continuously formed on both sides in the first direction D1 with respect to the valve accommodation unit 42a.

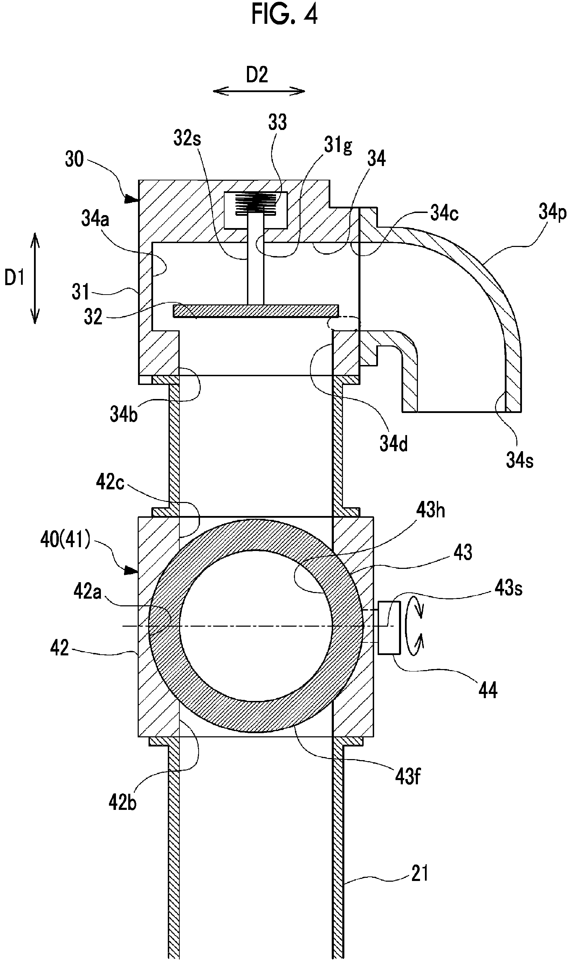

The ball valve body 43 is rotatable around a valve shaft 43s intersecting the first direction D1 within the valve accommodation unit 42a. The ball valve body 43 has a valve outer peripheral surface 43f that curves and bulges radially outward. The ball valve body 43 has a through-hole 43h extending orthogonal to the valve shaft 43s direction. The inner diameter of the through-hole 43h has the same dimensions as the inner diameters of the inflow port 42b and the outflow port 42c. The opening-closing valve 40 rotates around the valve shaft 43s to switch between an open state and a closed state. In the opening-closing valve 40, in the open state, the through-hole 43h of the ball valve body 43 and the inflow port 42b and the outflow port 42c are continuous in the first direction D1. As shown in Fig. 4, in a closed state of the opening-closing valve 40, the inflow port 42b (and the outflow port 42c) is blocked by the valve outer peripheral surface 43f of the ball valve body 43.

The operation handle 44 is provided outside the ball valve body 43. The operation handle 44 is connected to a valve shaft 43s of the ball valve body 43. The operator rotates the ball valve body 43 in the valve accommodation unit 42a by rotating the operation handle 44 around the valve shaft 43s, and switches the opening-closing valve 40 between the open state and the closed state. The opening-closing valve 40 is always in an open state (fully open state) in a normal state. In the open state, the opening-closing valve 40 does not block the flow channel in the communication pipe 21. As shown in Fig. 4, in a case where the opening-closing valve 40 cannot normally return from the open state to the closed state after the safety valve 30 operates to open the inside of the tank 11 to the outside (atmosphere), the operator closes the opening-closing valve 40 to block the flow channel in the communication pipe 21.

When the safety valve 30 is operated, the notification unit 60 shown in Fig. 2 notifies the operator of various states of the safety valve device 20. Therefore, the safety valve device 20 includes at least a pressure sensor 25 and a valve detection unit 26. The pressure sensor 25 measures a pressure Pt of the liquefied carbon dioxide L in the tank 11. The valve detection unit 26 detects the operation of the safety valve 30. Specifically, the valve detection unit 26 detects an open/closed state of the valve body 32, for example, by a stroke of the valve shaft 32s. After the operation of the safety valve 30, the alarm may be issued when the pressure of the safety valve 30 is equal to or lower than the blowoff pressure and when the decompression continuation is detected.

### (Hardware Configuration Diagram)

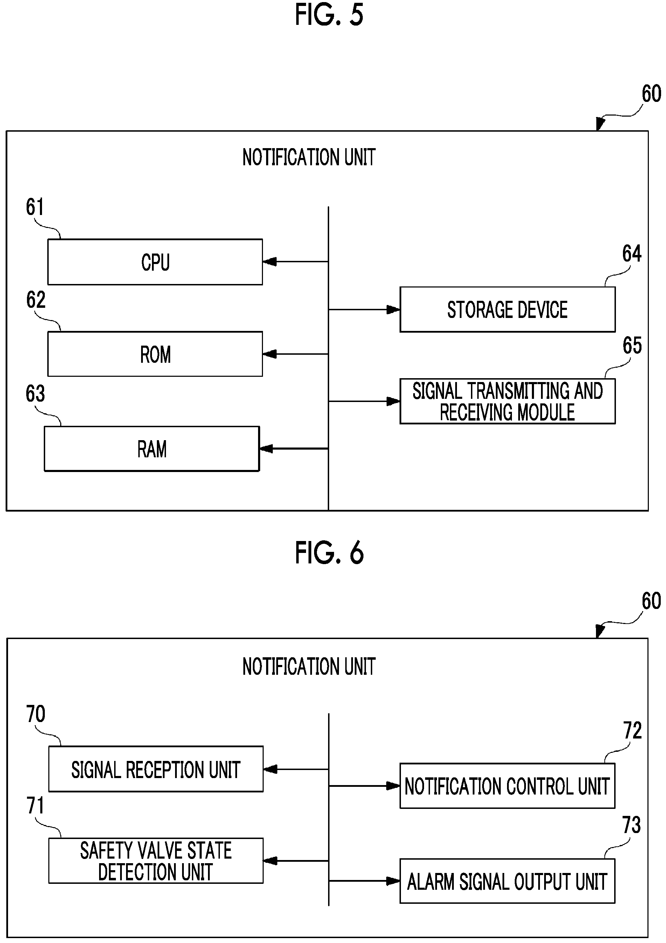

As shown in Fig. 5, the notification unit 60 includes, for example, a computer including a CPU 61 (central processing unit), a ROM 62 (read only memory), a RAM 63 (random access memory), a storage device 64, and a signal receiving module 65. The signal receiving module 65 receives the detection signal from the pressure sensor 25 and the valve detection unit 26.

### (Functional Block Diagram)

As shown in Fig. 6, the CPU 61 of the notification unit 60 executes a program stored in the own device in advance to include each of a signal reception unit 70, a safety valve state detection unit 71, a notification control unit 72, and an alarm information output unit 73.

The signal reception unit 70 is the signal receiving module 65 in terms of hardware, and receives a detection signal from the pressure sensor 25 and the valve detection unit 26.

The safety valve state detection unit 71 detects whether the valve body 32 of the safety valve 30 is in the open state or the closed state, based on the detection signal from the valve detection unit 26.

The notification control unit 72 controls a notification to be output to the outside. For example, when the safety valve state detection unit 71 detects that the valve body 32 has shifted from the closed state to the open state, the notification control unit 72 generates a notification signal indicating that the safety valve 30 was operated. In addition, the notification control unit 72 generates a notification signal indicating that the pressure Pt in the tank 11 dropped to a pressure at which the safety valve 30 is supposed to return from the open state to the closed state when the pressure Pt in the tank 11 detected by the pressure sensor 25 dropped to a predetermined threshold value less than the safety valve return pressure P2 after the safety valve state detection unit 71 detects that the valve body 32 shifted from the closed state to the open state. The notification control unit 72 generates a notification signal indicating that the safety valve 30 does not normally return to the closed state when the pressure Pt in the tank 11 detected by the pressure sensor 25 continues to drop below the safety valve return pressure P2 and reaches a preset pressure set value P3 (threshold value).

The alarm information output unit 73 outputs alarm information to the outside based on the notification signal generated by the notification control unit 72. The alarm information output unit 73 outputs alarm information, for example, by sounding an alarm sound, lighting an alarm lamp, displaying a message on a monitor screen, or the like. In this manner, the alarm information output unit 73 notifies an external operator of the operating state of the safety valve 30.

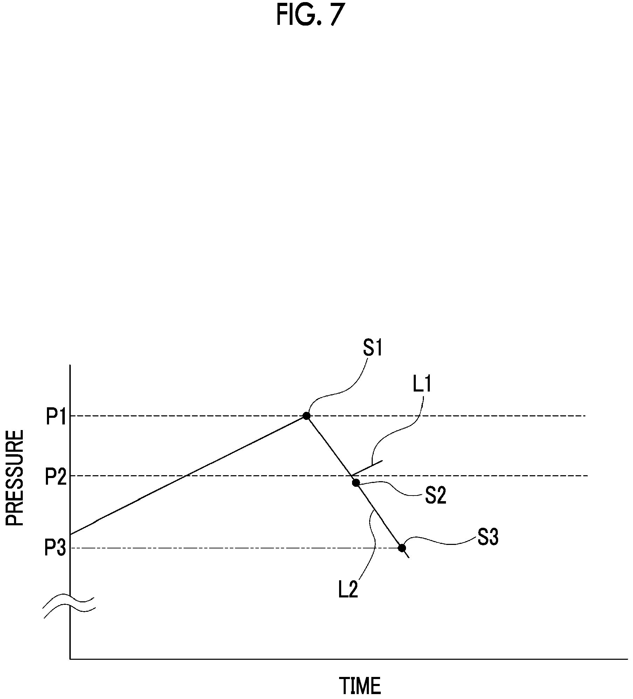

As shown in Fig. 7, when the pressure inside the tank 11 rises to the safety valve operating pressure P1, the notification unit 60 outputs the alarm information S1. After that, the pressure inside the tank 11 starts to rise as shown by line L1 in Fig. 7 when the pressure in the tank drops to the safety valve return pressure P2 and the safety valve 30 normally returns from the open state to the closed state, after the safety valve 30 is opened and the gas in the tank 11 is discharged to the outside. After that, no alarm information is output.

On the other hand, as shown by a line L2 in Fig. 7, the pressure in the tank 11 further drops in a case where the valve body 32 cannot return to the closed state by the formed dry ice after the safety valve 30 is opened and the gas in the tank 11 is discharged to the outside. When the pressure inside the tank 11 drops to a predetermined threshold value lower than the safety valve return pressure P2, and when the pressure inside the tank 11 continues to drop below the safety valve return pressure P2 and reaches the preset pressure set value P3, the alarm information S2 and S3 are output.

When the operator receives the notification of the alarm information S2 or S3, the operator manually operates the operation handle 44 to close the opening-closing valve 40. As a result, the flow channel in the communication pipe 21 is blocked by the opening-closing valve 40, and the pressure in the tank 11 is prevented from escaping to the outside.

### (Effects)

In the ship 1 of the above-described embodiment, when the pressure Pt in the tank 11 reaches the predetermined safety valve operating pressure P1, the valve body 32 of the safety valve 30 is opened and the flow channel in the communication pipe 21 is opened. As a result, the liquefied carbon dioxide L (gas) in the tank 11 is discharged to the outside of the tank 11 through the communication pipe 21, and the pressure Pt in the tank 11 decreases. When the pressure Pt in the tank 11 decreases, normally, the valve body 32 of the safety valve 30 closes. As shown in Fig. 4, when the operation of closing the valve body 32 is obstructed by the dry ice formed by the pressure drop of the liquefied carbon dioxide L discharged through the safety valve 30, the opening-closing valve 40 disposed between the safety valve 30 and the tank 11 is closed, and accordingly, the flow channel in the communication pipe 21 is blocked. As a result, escaping of the gas in the tank 11 from the communication pipe 21 can be suppressed. Therefore, even in a case where the closing operation of the safety valve 30 by the dry ice formed when the safety valve 30 is operated is obstructed, the inside of the tank 11 can be reliably sealed after the operation of the safety valve 30 is ended.

Further, in the above embodiment, the opening-closing valve 40 is the ball valve 41. In such a configuration, in the ball valve 41, the flow channel is less likely to be narrowed at a part where the valve body 32 is provided. Therefore, it is possible to block the flow channel in the communication pipe 21 with a simple configuration while suppressing the pressure loss formed in the opening-closing valve 40.

In addition, in the above-described embodiment, the opening-closing valve 40 opens and closes the flow channel in the communication pipe 21 by a manual operation from an outside. Accordingly, when the closing operation of the safety valve 30 is obstructed by the dry ice, the opening-closing valve 40 can be easily closed by a manual operation.

In addition, in the above-described embodiment, when the closing operation of the safety valve 30 is obstructed by the dry ice, the notification unit 60 notifies the outside. As a result, the operator can recognize that the safety valve 30 is not normally closed, and can prepare for the work of closing the opening-closing valve 40 or the like.

Further, in the above-described embodiment, the discharge port 34s of the safety valve 30 is open to the atmosphere and is open downward. As a result, intrusion of rainwater or the like into the safety valve 30 through the discharge port 34s of the safety valve 30 is suppressed.

In addition, the above-described ship 1 includes the hull 2, the tank 11, the communication pipe 21, and the safety valve 30, and the discharge port 34s of the safety valve 30 is open to the atmosphere and is open downward.

As a result, intrusion of rainwater or the like into the safety valve 30 through the discharge port 34s of the safety valve 30 is suppressed.

### (Modification Example of Embodiment)

In the above embodiment, the opening-closing valve 40 is manually closed, but the opening-closing valve 40 may be automatically closed. In this case, an actuator for rotating the ball valve body 43 of the opening-closing valve 40 around the valve shaft 43s and a controller for controlling the operation of the actuator may be further provided. Then, in the controller, for example, the operation of the actuator may be controlled such that the opening-closing valve 40 is automatically closed at the timing when the alarm information S2 or S3 is output by the notification unit 60. Specifically, after the safety valve 30 is opened and the pressure inside the tank 11 is discharged to the outside, when the valve body 32 cannot return to the closed state due to the formed dry ice and the pressure in the tank 11 drops to be less than the safety valve return pressure P2, or when the pressure in the tank 11 continues to further drop below the safety valve return pressure P2 and reaches the preset pressure set value P3, or the like, the actuator may be operated to automatically close the opening-closing valve 40.

In addition, in the controller that automatically closes the opening-closing valve 40, whether or not the safety valve 30 is normally closed may be confirmed by detecting the pressure and the temperature in the communication pipe 21 between the safety valve 30 and the opening-closing valve 40 with a sensor.

### (Other Embodiments)

Above, the embodiments of the present disclosure have been described in detail with reference to the drawings, but the specific configuration is not limited to the embodiments, and includes design changes and the like within a scope not departing from the gist of the present disclosure.

For example, in the above-described embodiment, the configuration of the ball valve 41 as the safety valve 30 and the opening-closing valve 40 described above has been shown. However, in this configuration, an outline of the configuration for exhibiting the functions as the safety valve 30 and the opening-closing valve 40 will be described, the specific configuration can be appropriately changed. Further, the opening-closing valve 40 is not limited to the ball valve 41, and other types may be appropriately used.

In addition, in the above-described embodiment, a case where the opening-closing valve 40 is provided and the discharge port 34s of the safety valve 30 faces downward has been described as an example. However, only one of a configuration including the opening-closing valve 40 and a configuration in which the discharge port 34s of the safety valve 30 faces downward may be provided.

Further, in the above-described embodiment, the ship 1 as a floating structure is configured to include the two tanks 11, but the present disclosure is not limited thereto. For example, one or more tanks 11 may be provided.

In addition, in the above embodiment, the ship 1 is exemplified as the floating structure, but the present disclosure is not limited thereto. The floating structure may be an offshore floating structure facility that does not include a propulsion mechanism.

### <Additional Note>

The floating structure 1 described in the embodiment is ascertained as follows, for example.

(1) According to a first aspect, there is provided the floating structure 1 including: the floating main structure 2; the tank 11 disposed in the floating main structure 2 and capable of storing the liquefied carbon dioxide L; the communication pipe 21 connected to the tank 11 and communicating with the outside of the tank 11; the safety valve 30 provided in the communication pipe 21, having the valve body 32 capable of opening and closing the flow channel in the communication pipe 21, and allowing the inside of the tank 11 and the outside of the tank 11 to communicate with each other by opening the valve body 32 when the pressure Pt inside the tank 11 reaches the predetermined safety valve operating pressure P1; and the opening-closing valve 40 provided in the communication pipe 21, disposed between the safety valve 30 and the tank 11, and capable of blocking the flow channel in the communication pipe 21.

Examples of the floating structure 1 include a ship and an offshore floating structure facility. Examples of the floating main structure 2 include the floating main structure 2 of a hull or an offshore floating structure facility.

In the floating structure 1, when the pressure Pt in the tank 11 reaches the predetermined safety valve operating pressure P1, the valve body 32 of the safety valve 30 is opened and the flow channel in the communication pipe 21 is opened. As a result, the pressure Pt in the tank 11 is discharged to the outside of the tank 11 through the communication pipe 21. When the pressure Pt in the tank 11 decreases, normally, the valve body 32 of the safety valve 30 closes. When the operation of closing the valve body 32 is obstructed by the dry ice formed by the pressure drop of the liquefied carbon dioxide L discharged through the safety valve 30, the opening-closing valve 40 disposed between the safety valve 30 and the tank 11 is closed, and accordingly, the flow channel in the communication pipe 21 is blocked. As a result, escaping of the pressure Pt in the tank 11 from the communication pipe 21 can be suppressed. Therefore, even in a case where the closing operation of the safety valve 30 by the dry ice formed when the safety valve 30 is operated is obstructed, the inside of the tank 11 can be reliably sealed after the operation of the safety valve 30 is ended.

(2) In the floating structure 1 according to a second aspect, which is the floating structure 1 of (1), the opening-closing valve 40 is the ball valve 41.

In such a configuration, in the ball valve 41, the flow channel is less likely to be narrowed at a part where the valve body 32 is provided. Therefore, it is possible to block the flow channel in the communication pipe 21 with a simple configuration while suppressing the pressure loss formed in the opening-closing valve 40.

(3) In the floating structure 1 according to a third aspect, which is the floating structure 1 of (1) or (2), the opening-closing valve 40 opens and closes the flow channel in the communication pipe 21 by a manual operation from an outside.

Accordingly, when the closing operation of the safety valve 30 is obstructed by the dry ice, the opening-closing valve 40 can be easily closed by a manual operation.

(4) The floating structure 1 according to a fourth aspect, which is the floating structure 1 of any one of (1) to (3), further includes: the pressure sensor 25 that measures the pressure Pt inside the tank 11; the valve detection unit 26 that detects an operation of the safety valve 30; and the notification unit 60 that notifies an outside of the fact that the pressure Pt measured by the pressure sensor 25 is decreased to be lower than a predetermined threshold value, when the operation of the safety valve 30 is detected by the valve detection unit 26.

Accordingly, when the closing operation of the safety valve 30 is obstructed by the dry ice, the notification unit 60 notifies the outside. As a result, the operator can recognize that the safety valve 30 is not normally closed, and can prepare for the work of closing the opening-closing valve 40 or the like.

(5) In the floating structure 1 according to a fifth aspect, which is the floating structure 1 of any one of (1) to (4), the discharge port 34s of the safety valve 30 is open to an atmosphere and is open downward.

As a result, intrusion of rainwater or the like into the safety valve 30 through the discharge port 34s of the safety valve 30 is suppressed.

(6) According to a sixth aspect, there is provided the floating structure 1 including: the floating main structure 2; the tank 11 disposed in the floating main structure 2 and capable of storing the liquefied carbon dioxide L; the communication pipe 21 connected to the tank 11 and communicating with the outside of the tank 11; and the safety valve 30 provided in the communication pipe 21, having the valve body 32 capable of opening and closing the flow channel portion 34 in the communication pipe 21, and allowing the inside of the tank 11 and the outside of the tank 11 to communicate with each other by opening the valve body 32 when the pressure Pt inside the tank 11 reaches the predetermined safety valve operating pressure P1, in which the safety valve 30 includes the discharge pipe 34p having the discharge port 34s which is open to an atmosphere and is open downward.

As a result, intrusion of rainwater or the like into the safety valve 30 through the discharge port 34s of the safety valve 30 is suppressed.

### Industrial Applicability

According to the floating structure of the present disclosure, even when the closing operation of the safety valve is obstructed by the dry ice formed when the safety valve is operated, the inside of the tank can be reliably sealed.

### Reference Signs List

- 1:: Ship (floating structure)
- 2:: Floating main structure (hull)
- 2a:: Stem
- 2b:: Stern
- 3A, 3B:: Side
- 5:: Upper deck
- 7:: Superstructure
- 8:: Cargo tank storage compartment
- 10:: Tank facility
- 11:: Tank
- 13:: Loading pipe
- 14:: Unloading pipe
- 20:: Safety valve device
- 21:: Communication pipe
- 25:: Pressure sensor
- 26:: Valve detection unit
- 30:: Safety valve
- 31:: Valve box
- 31g:: Holding hole
- 32:: Valve body
- 32s:: Valve shaft
- 33:: Energizing member
- 34:: Flow channel portion
- 34a:: Valve chamber
- 34b:: Inflow nozzle
- 34c:: Discharge nozzle
- 34d:: Opening
- 34p:: Discharge pipe
- 34s:: Discharge port
- 40:: Opening-closing valve
- 41:: Ball valve
- 42:: Ball valve housing
- 42a:: Valve accommodation unit
- 42b:: Inflow port
- 42c:: Outflow port
- 43:: Ball valve body
- 43f:: Valve outer peripheral surface
- 43h:: Through-hole
- 43s:: Valve shaft
- 44:: Operation handle
- 60:: Notification unit
- 61:: CPU
- 62:: ROM
- 63:: RAM
- 64:: Storage device
- 65:: Signal receiving module
- 70:: Signal reception unit
- 71:: Safety valve state detection unit
- 72:: Notification control unit
- 73:: Alarm information output unit
- L:: Liquefied carbon dioxide

## Claims

1. A floating structure comprising:
a floating main structure;
a tank disposed in the floating main structure and capable of storing liquefied carbon dioxide;
a communication pipe connected to the tank and communicating with an outside of the tank;
a safety valve provided in the communication pipe, having a valve body capable of opening and closing a flow channel in the communication pipe, and allowing an inside of the tank and the outside of the tank to communicate with each other by opening the valve body when a pressure inside the tank reaches a predetermined safety valve operating pressure; and
an opening-closing valve provided in the communication pipe, disposed between the safety valve and the tank, and capable of blocking a flow channel portion in the communication pipe.

2. The floating structure according to claim 1, wherein the opening-closing valve is a ball valve.

3. The floating structure according to claim 1 or 2,
wherein
the opening-closing valve opens and closes the flow channel portion in the communication pipe by a manual operation from an outside.

4. The floating structure according to any one of claims 1 to 3, further comprising:
a pressure sensor that measures the pressure inside the tank;
a valve detection unit that detects an operation of the safety valve; and
a notification unit that notifies an outside of the fact that the pressure measured by the pressure sensor is decreased to be lower than a predetermined threshold value, when the operation of the safety valve is detected by the valve detection unit.

5. The floating structure according to any one of claims 1 to 4, wherein
a discharge port of the safety valve is open to an atmosphere and is open downward.

6. A floating structure comprising:
a floating main structure;
a tank disposed in the floating main structure and capable of storing liquefied carbon dioxide;
a communication pipe connected to the tank and communicating with an outside of the tank; and
a safety valve provided in the communication pipe, having a valve body capable of opening and closing a flow channel portion in the communication pipe, and allowing an inside of the tank and the outside of the tank to communicate with each other by opening the valve body when a pressure inside the tank reaches a predetermined safety valve operating pressure, wherein
the safety valve includes a discharge pipe having a discharge port which is open to an atmosphere and is open downward.
